Europäisches Patentamt

European Patent Office

Office européen des brevets

(19)

(11) Publication number: **0 205 312**

A1

# EUROPEAN PATENT APPLICATION

(12)

(21) Application number: **86304276.8**

(22) Date of filing: **04.06.86**

(51) Int. Cl.⁴: **B 65 D 39/00**
**B 65 D 39/18, B 29 C 71/04**

(30) Priority: **04.06.85 JP 122015/85**

(43) Date of publication of application:
**17.12.86 Bulletin 86/51**

(84) Designated Contracting States:
**DE FR GB IT**

(71) Applicant: **NITTO ELECTRIC INDUSTRIAL CO., LTD.**
**1-2, Shimohozumi 1-chome Ibaraki-shi**
**Osaka 567(JP)**

(71) Applicant: **DAIKYO GOMU SEIKO LTD.**
**No. 38-2, Sumida 3-chome Sumida-ku**
**Tokyo(JP)**

(72) Inventor: **Okamoto, Takafumi c/o Nitto Electric Ind. Co.,**
**Ltd**
**1-2, Shimohozumi 1-chome**
**Ibaraki-shi Osaka(JP)**

(72) Inventor: **Uemori, Kazuyoshi c/o Nitto Electric Ind. Co.,**
**Ltd**
**1-2, Shimohozumi 1-chome**
**Ibaraki-shi Osaka(JP)**

(72) Inventor: **Suzuki, Shoji c/o Nitto Electric Ind. Co., Ltd**
**1-2, Shimohozumi 1-chome**
**Ibaraki-shi Osaka(JP)**

(72) Inventor: **Okuda, Akiyoshi c/o Daikyo Gomu Seiko, Ltd**
**38-2, Sumida 3-chome**
**Sumida-ku Tokyo(JP)**

(72) Inventor: **Muraki, Tomoyasu c/o Daikyo Gomu Seiko,**
**Ltd**
**38-2, Sumida 3-chome**
**Sumida-ku Tokyo(JP)**

(74) Representative: **Diamond, Bryan Clive et al,**
**Gee & Co. Chancery House Chancery Lane**
**London WC2A 1QU(GB)**

(54) **Production of coated rubber plug for containers.**

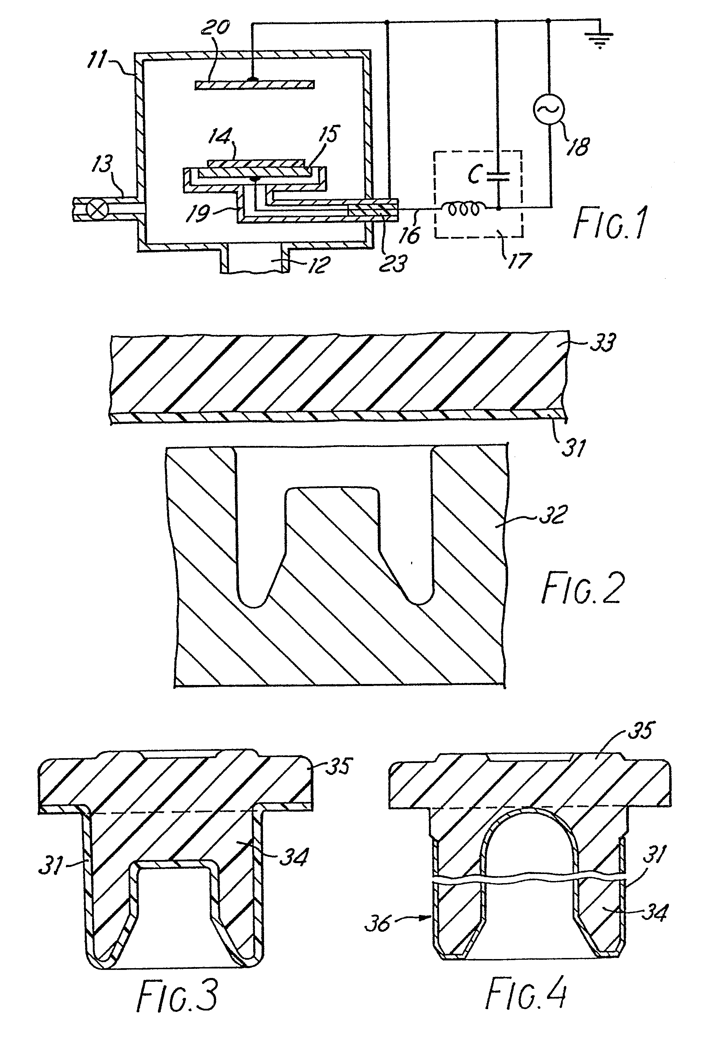

(57) A film of a fluoro polymer (e.g. a copolymer of ethylene and tetrafluoroethylene) is subjected to sputter etching at a discharge power of 0.1 to 20 Watt.sec/cm², e.g. 0.1 – 2 Watt for 1 – 10 secs, in an inert gas at a pressure of $10^{-3}$ to $10^{-1}$ Torr. to render the surface adhesive to rubber; apparatus which can be used, including a high frequency electric source is shown in Figure 1.

The treated surface is placed against a sheet of unvulcanised rubber and the sheet and film laminated together with heat and pressure. A piece of the laminate is placed on a mold and forced therein, and heated to shape it to a plug (35) having the polymer (31) laminated to the surfaces of the rubber (34) which will contact the interior of a container; the rubber is also vulcanised by the heat.

The plug is useful in closing containers of medicaments since the polymer is inert. The surface treatment gives good adhesion of the polymer and rubber.

FIG.3

# PRODUCTION OF COATED RUBBER PLUG FOR CONTAINERS

This invention relates to a rubber plug and a process for producing the same and, more particularly, an elastomeric rubber plug at least part of the surface of which has a coating of a polymer laminated thereon.

A rubber plug for a container for medical use, unlike rubber plugs for general use, must meet standard requirements specified by rules. Moreover, there is an exacting and growing demand for reliability of medical containers. To this demand, various kinds of rubber plugs having a fluoro polymer layer coated on their surface which is inserted into the container have been proposed and used. These coated plugs do not contaminate the medicament in the container since, in general, a fluoro polymer prevents rubber compounding ingredients from being dissolved out into the medicament, and the polymer is not itself disolved out because of its extreme inertness and excellent chemical resistance.

However, fluoro polymers lack adhesion to and compatibility with a rubber, due to their inertness. Therefore, such coated rubber plugs have conventionally been produced by previously surface treating a fluoro polymer film or sheet prior to adhesion to a rubber plug. For example, Japanese Patent Publication No. 1355/77 discloses a process for producing a fluoro polymer laminated rubber plug for medical containers, which comprises molding a film of a fluoro polymer, one surface of which having been rendered adhesive by treatment with sodium naphthalene, into a plug shape, placing the plug in a mold of a prescribed shape in the manner such that its treated surface faces a piece of unvulcanized rubber, and heating the laminate under pressure. However, this process is not always industrially advantageous because such a surface treatment involves complicated procedures due to the use of metallic sodium. Further, there is a fear that some sodium may remain in the fluoro polymer film.

It is well known to treat the surface of a fluoro polymer film by corona discharge to render it adhesive. However, when thus treated film and an unvulcanized rubber sheet are laminated and shaped into a plug, the effect of the above adhesion treatment on the polymer is considerably reduced. In particular, adhesion in the stretched parts is substantially lost, and it is very difficult to adhere the film to a rubber even with an adhesive. Therefore, it is necessary to pre-mold the fluoro polymer film into a prescribed shape, which complicates the procedure and increases its cost.

Japanese Patent Publication No. 53184/82 describes a process for producing a laminated elastomeric plug, which comprises laminating a film of a fluoro polymer and an unvulcanized rubber sheet in a mold and heating the laminate under pressure to shape it to a plug. By this process, however, adhesion between the fluoro polymer film and the rubber is not satisfactory because a fluoro polymer film is generally far inferior to rubber in moldability and also because the polymer film is stretched upon thus shaping into a plug.

The published Japanese Patent Application (OPI) No. 5046/84 describes a process which comprises subjecting a fluoro copolymer film to a surface treatment such as corona discharge, glow discharge or arc discharge, to form a crosslinked thin film having a sputtering effect, laminating the treated resin film and an unvulcanized rubber sheet in a plug-shaped mold, and heating the laminate under pressure to thereby shape the laminate to a plug simultaneously with vulcanization of the rubber. This process similarly involves partial stretching of the resin film upon shaping to a plug, and it is difficult, therefore, to obtain a laminated plug wherein there is excellent adhesion between the fluoro polymer film and the rubber.

We have now found that a high quality plug can be produced easily and stably by heating a fluoro polymer film which has been previously subjected to sputter etching at a prescribed power together with an unvulcanized rubber in a mold under pressure to shape it into a plug. The resultant plug made of rubber with a surface coating of fluoro polymer exhibits excellent adhesion between the film of polymer and the rubber even in the stretched part of the film.

The present invention thus provides a rubber plug, whereof at least the surface which is to be inserted in a container has laminated thereto a film of a fluoro polymer, the adhered film surface having been previously subjected to a sputter etching treatment under a discharge power condition of from 0.1 to 20 Watt$\cdot$sec/cm$^2$.

Such a plug is prepared according to the invention by subjecting one surface of a film of a fluoro polymer to sputter etching under a discharge power condition of from 0.1 to 20 Watt·sec/cm$^2$, laminating the film with an unvulcanized rubber sheet in the manner such that the treated surface of the film is in contact with the rubber sheet, heating the laminate in a mold under pressure to vulcanize the unvulcanized rubber and simultaneously shaping the laminate into a plug shape.

In the accompanying drawings:

Figure 1 is a cross-sectional view of an apparatus used for sputter etching;

Figure 2 is a cross-sectional view of the laminate of a fluoro polymer film and an unvulcanized rubber sheet and a cavity for molding the laminate;

Figure 3 is a cross-sectional view illustrating an example of a laminated rubber plug according to the present invention; and

Figure 4 is a cross-sectional view of an other example of a plug according to the invention.

The fluoro polymer film which can be used in the present invention can be a film of polytetrafluoroethylene, an ethylene-tetrafluoroethylene copolymer, a tetrafluoro-ethylene-perfluoroalkyl vinyl ether copolymer, a tetrafluoroethylene-hexafluoropropylene copolymer, polyvinylidene fluoride, polychlorotrifluoroethylene.

The polymer resin film generally has a thickness of from 15 to 500 μm, although varying depending on the purpose of use and the like.

The rubber which can be used in the present invention includes natural rubber and various synthetic rubbers, such as butyl rubber, an ethylene-propylene terpolymer, epichlorohydrin rubber, isoprene rubber, butadiene rubber, styrene-butadiene rubber, urethane rubber, etc.

In the process of the invention, the fluoro polymer film is subjected to sputter etching so as to impart the adhesion to the surface thereof.

Sputter etching is a treatment wherein high frequency voltage is applied between an anode and a cathode in a pressure chamber in a reduced pressure atmosphere, and a cation generated by discharge collides with the fluorine polymer film in a cathode dark space of high ion energy levels within the discharge zone. In the present invention, in order to obtain a uniformly treated surface at a practical speed of sputter etching, the sputter etching is usually carried out at room temperature under reduced pressure of from $10^{-3}$ to $10^{-1}$ Torr. (=1.33 X $10^{-4}$ to $10^{-2}$ Pa).

In the sputter etching used in the present invention, the product of the discharge power and the treating time, i.e., the amount of discharge power treatment, is set within a range of from 0.1 to 20 Watt·sec/cm$^2$. If the amount of discharge power treatment is less than 0.1 Watt·sec/cm$^2$, it is difficult to impart sufficient adhesiveness to the fluorine resin film, and if the amount thereof is more than 20 Watt·sec/cm$^2$, the film tends to deform.

The discharge power is usually from 0.01 to 5 Watt/cm$^2$, and preferably from 0.1 to 2 Watt/cm$^2$. The treating time should naturally be prolonged as the discharge power decreases. From the practical standpoint, it is desirable to increase the discharge power and shorten the treating time. In general, the treating time is from 1 to 10 seconds. High frequency voltage of from several hundred KHz to several ten MHz can be employed, but a frequency of 13.56 MHz available as commercially is used to practical advantage.

Many kinds of gases may be used as the atmosphere for the sputter etching, but, in general, inert gases (e.g., argon or nitrogen), air, steam or carbon dioxide are employed.

An example of the sputter etching apparatus which can preferably be used in the present invention is explained below by reference to Fig. 1.

Reference numeral 11 represents a pressure reduction chamber, to which an exhaust pipe 12 and a gas introducing conduit 13 are connected. Gases in the chamber are exhausted through the exhaust pipe, and a gas is introduced in the chamber through the conduit to thereby maintain the atmosphere in the chamber under a prescribed reduced pressure. An electrode 15 for sputter etching of a fluoro polymer film 14 is held within the chamber and electrically insulated from the chamber. An airtight lead wire 16 connects the electrode 15 with a high frequency electric source 18 via a matching box 17 having an impedance matching circuit composed of a capacitor C and an inductor L. Further, a shielding electrode 19 for the electrode 15 and an opposing electrode 20 are connected to the ground side of the high frequency electric source 18. When the pressure reduction chamber 11 is made of an electrically conductive metal, the chamber is connected to the ground side of the high frequency electric source.

Referring to the above-described apparatus, the mechanism of sputter etching is explained below. When the potential of the electrode 15 is positive with respect to the opposing electrode 20, the positive ions resulting from the discharge are accelerated and collide with the surface of the fluoro polymer film 14 to thereby perform sputter etching. The positive charge is stored on the surface of the polymer film to increase the surface potential. As a result, a difference in potential between the film surface and the opposing electrode 20 is reduced so that it becomes difficult to maintain discharging. However, in a next half cycle of the high frequency voltage, the potential of the electrode 15 with respect to the opposing electrode 20 becomes positive. Hence, an electron enterss the surface of the polymer film from the discharge space to neutralize the positive ions stored on the surface. As a result, in the next half cycle of the high frequency voltage, the potential of the electrode 15 with respect to the opposing electrode 20 again becomes negative, making a large enough difference to permit discharge. Thus, the collision of positive ions against the polymer film surface and the neutralization of the positive ion stored on the polymer film surface are alternately repeated in every cycle of the high frequency voltage, to thereby accomplish sputter etching of the polymer film surface.

The process for producing an elastomeric rubber/plug in accordance with this invention will be below by reference to Figs. 2, 3 and 4.

Referring to Fig. 2, a fluoro polymer film 31 having its surface sputter etched as described above is placed in a lower mold 32 having a plug-shaped cavity, and an unvulcanized rubber sheet 33 is laminated thereon. After an upper mold (not shown) is mounted thereon, the laminate is heated at a prescribed temperature under a prescribed pressure to shape it to a plug. A rubber plug 35 composed of shaped vulcanized rubber 34 on the surface of which is laminated the fluoro polymer film 31 can thus be obtained, as illustrated in Fig. 3. Fig. 4 shows another embodiment of the rubber plug according to the present invention, wherein the plug has a long leg portion 36 and the fluoro polymer film 31 is laminated on only the leg portion of the rubber plug 35.

By the process of this invention, an excellent adhesion is obtained between the film of fluoro polymer and the rubber, easily and precisely, since the adhesive properties can be maintained even if the sputter-etched surface of the polymer film is stretched in the shaping.

This invention will now be illustrated in greater detail by reference to the following examples.

EXAMPLE 1

One surface of a 50 μm thick ethylene-tetrafluoro-ethylene copolymer (ETFE) film (EP520, produced by Daikin Kogyo Co., LTd.) was subjected to sputter etching in a vacuum chamber under a pressure of $10^{-2}$ Torr with the amount of discharge treatment (discharge power x treating time) of 0.05 Watt·sec/cm$^2$ (Condition A), 0.1 Watt·sec/cm$^2$ (Condition B) or 5 Watt·sec/cm$^2$ (Condition C). For comparison, the same ETFE film was subjected to corona discharge treatment at a frequency of 110 KHz, a discharge power of 150 Watt/m$^2$ and a film feed rate of 5 m/min (Condition D). Further, stretched film samples were prepared from films treated under Condition C or D at a stretch ratio shown in Table 1 below.

Then, unvulcanized rubber of the following compounding formulation was kneaded using a two-roll rubber mill or an internal mixer according to the method as described in Gomu Shikenho (Test Methods for Rubber), pp. 108-118, edited by The Japan Rubber Association to prepare a rubber sheet having a thickness of 8 mm.

|  | Amount (parts by weight) |
|---|---|
| Butyl rubber (Butyl 365, produced by Japan Synthetic Rubber Co., Ltd.) | 100 |
| Zinc white | 3 |
| Stearic acid | 0.5 |
| Clay | 60 |
| Processing aid | 1.2 |
| Magnesium oxide | 5 |
| White carbon | 10 |
| Titanium oxide | 3 |
| Sulfur | 0.7 |
| Zinc di-n-butyldithiocarbamate | 0.7 |
| Zinc diethyldithiocarbamate | 0.5 |

The above unvulcanized rubber sheet was laminated on each of the treated polymer film and heat-pressed at a temperature of 180°C under a pressure of 10 kg/cm$^2$ for a period of 10 minutes to integrally bond the laminate.

A 10 mm wide strip was cut from each resulting sample sheet, and a 180° peeling test was conducted at a temperature of -20°C or 25°C and at a peel rate of 200 mm/min to evaluate the adhesive strength. In some runs, an adhesive ("CHEMLOK" (registered trademark), a product of Hughson Chemical, Lord Corp.) was coated on the treated surface of the film and the unvulcanized rubber sheet was laminated thereon.

The results obtained are shown in Table 1 below.

Table 1

| Sample No. | Treating Condi- tion | Stretch Ratio (%) | Adhesive | Peel Strength (kg/cm) | |
|---|---|---|---|---|---|
| | | | | 25°C | -20°C |
| 1 | A | non-stretched | used | 0.9 | — |
| 2 | B | " | " | break*(>2.3) | — |
| 3 | B | " | not used | " (>2.4) | — |
| 4 | C | " | used | " (>2.3) | 1.9 |
| 5 | C | " | not used | " (>2.3) | 2.8 |
| 6 | C | 100 | used | " (>2.4) | 1.8 |
| 7 | C | 100 | not used | " (>2.5) | 2.9 |
| 8 | C | 200 | used | " (>2.5) | 1.5 |
| 9 | C | 200 | not used | " (>2.5) | 2.3 |
| 10 | C | 300 | used | " (>2.3) | 1.3 |
| 11 | C | 300 | not used | " (>2.4) | 2.1 |
| 12 | D | non-stretched | used | 2.2 | 2.1 |
| 13 | D | " | not used | 1.5 | 1.3 |
| 14 | D | 100 | used | 0.5 | 0.2 |
| 15 | D | 100 | not used | 0.3 | 0.02 |
| 16 | D | 200 | used | 0.3 | 0.15 |
| 17 | D | 200 | not used | 0.2 | 0.1 |
| 18 | D | 300 | used | 0.2 | 0.2 |
| 19 | D | 300 | not used | 0.1 | 0.02 |

Note: *: The term "break" means that the ETFE film was cut by peeling.

It is apparent from Table 1 that the fluoro polymer film which had been subjected to sputter etching according to the present invention exhibits markedly improved adhesion to rubber without exception, compared to the cases of using stretched films. It can be seen that the adhesion imparted by the corona discharge treatment disappears by stretching of the fluoro polymer resin.

## EXAMPLE 2

Each of the film samples treated under Condition C or D and the non-treated film as prepared in Example 1 was placed on the surface of a lower mold, and the unvulcanized rubber sheet as prepared in Example 1 was laminated on the film. An upper mold was mounted thereon, and the material was heated at 160°C under a pressure of 50 kg/cm$^2$ for 15 minutes to thereby cause vulcanization of the rubber simultaneously with adhesion between the rubber and the ETFE film.

The adhesion between the rubber and the ETFE film of the resulting rubber plugs was visually evaluated to obtain a percentage of rejects. In the determination of the percentage of rejects, 1280 laminated rubber plugs were produced in each run by repeating a molding cycle 20 times, each producing 64 laminated rubber plugs.

The results obtained are shown in Table 2.

Table 2

| Run No. | Treating Condition | Adhesive | Percentage of Rejects (%) | Remark |
|---------|--------------------|----------|---------------------------|--------|
| 1 | C | used | 3 | Invention |
| 2 | C | not used | 0 | " |
| 3 | D | used | 12 | Comparison |
| 4 | D | not used | 100 | " |
| 5 | untreated | used | 100 | " |
| 6 | untreated | not used | 100 | " |

It can be seen from Table 2 that the laminated rubber plugs according to the present invention are free from peeling of the polymer film due to poor adhesion during the molding as compared with the plugs wherein corona discharge-treated films are used. Therefore, the present invention makes it possible to produce fluoro polymer laminated rubber plugs with a markedly decreased percentage of rejects.

## EXAMPLE 3

A surface of a 100 μm thick film each of a tetrafluoroethylene-perfluoroalkyl vinyl ether copolymer (PFA) (Teflon 500PL, produced by Mitsui Fluoro Chemicals Inc.), a tetrafluoroethylene-hexafluoropropylene copolymer (FEP) (Neoflon FEP NF-0100, produced by Daikin Kogyo Co., Ltd.) and polyvinylidene fluoride (PVDF) (KF Polymer, produced by Kureha Kagaku Kogyo KK) was subjected to sputter etching in a vacuum chamber of $2 \times 10^{-3}$ Torr under a discharge condition of 10 Watt·sec/cm$^2$.

Fluoro polymer laminated rubber plugs were produced in the same manner as described in Example 2 but using each of the above treated films and also untreated films, and a percentage of rejects was determined in the same manner as in Example 2.

The results obtained are shown in Table 3 below.

Table 3

| Run No. | Fluorine Resin Film | Sputter Etching Treatment | Adhesive | Percentage of Rejects (%) | Remark |
|---------|---------------------|---------------------------|----------|---------------------------|--------|
| 1 | PFA | treated | not used | 4 | Invention |
| 2 | " | untreated | used | 16 | Comparison |
| 3 | FEP | treated | not used | 0 | Invention |
| 4 | " | untreated | used | 20 | Comparison |
| 5 | PVDF | treated | not used | 6 | Invention |
| 6 | " | untreated | used | 10 | Comparison |

It can be seen from the results of Table 3 that the laminated rubber plugs in accordance with the present invention suffer less from foaming or break upon shaping even though an adhesive was not used.

0205312

CLAIMS:

1. A rubber plug suitable for use for closing a container, at least the part of the plug which enters the container having laminated to the rubberbody (34) a coating (31) of a fluoro polymer, the surface of the polymer having been previously treated to render it adhesive, characterised in that the surface treatment was by sputter etching at a discharge power of 0.1 to 20 Watt·sec/$cm^2$ a film of the polymer.

2. A plug as claimed in Claim 1, wherein the rubber is natural rubber or synthetic rubber.

3. A plug as claimed in Claim 2, wherein the synthetic rubber is butyl rubber, ethylene-propylene terpolymer, epichlorohydrin rubber, isoprene rubber, butadiene rubber, styrene-butadiene rubber or urethane rubber.

4. A plug as claimed in Claim 1, 2 or 3, wherein the fluorine polymer is polytetrafluoroethylene, ethylene-tetrafluoroethylene copolymer, tetrafluoroethylene-perfluoroalkyl vinyl ether copolymer, tetrafluoro-ethylene-hexafluoropropylene copolymer, polyvinylidene fluoride film or polychlorotrifluoroethylene.

5. A process for producing a rubber plug as claimed in any of Claims 1 to 4, which comprises surface treating one surface of a film of fluoro polymer to render it adhesive to rubber, laminating the film and a piece of rubber together and shaping the laminate to a plug shape in a mold, characterised in that the surface treatment is by sputter etching at a discharge power of 0.1 to 20 Watt·sec/cm$^2$ on one surface of a film of the polymer, and the film and a sheet of unvulcanised rubber are laminated and heated in a mold under pressure to vulcanise the rubber and shape the laminate.

6. A process as claimed in Claim 5, wherein the sputter etching is carried out at room temperature under a pressure of from $10^{-3}$ to $10^{-1}$ Torr.

7. A process as claimed in Claim 5 or 6, wherein the sputter etching is carried out at a discharge power of from 0.1 to 2 Watt/cm$^2$ for a treating time of from 1 to 10 seconds.

8. A process as claimed in Claim 5, 6 or 7, wherein the sputter etching is carried out at a frequency of 13.56 MHz.

FIG.1

FIG.2

FIG.3

FIG.4

# EUROPEAN SEARCH REPORT

## DOCUMENTS CONSIDERED TO BE RELEVANT

EP 86304276.8

| Category | Citation of document with indication, where appropriate, of relevant passages | Relevant to claim | CLASSIFICATION OF THE APPLICATION (Int. Cl.4) |
|---|---|---|---|
| Y | GB - A - 2 106 084 (KK DAIKYO GOMU SEIKO)<br><br>* Totality, especially page 2, lines 15-29 *<br><br>-- | 1-8 | B 65 D 39/00<br>B 65 D 39/18<br>B 29 C 71/04 |
| Y | JP - A - 53-7 772 (NITTO DENKI KOGYO KK)<br><br>* Totality, especially pages 403,406 *<br><br>-- | 1-8 | |
| Y | US - A - 3 628 681 (SALOMON SCHWARTZ)<br><br>* Totality *<br><br>-- | 1-8 | |
| Y | JP - A - 60-20 941 (NITTO DENKI KOGYO KK)<br><br>* Totality, especially page 308 *<br><br>-- | 1-8 | **TECHNICAL FIELDS SEARCHED (Int. Cl.4)**<br><br>B 65 D 39/00<br>B 65 D 53/00<br>B 29 C 71/00 |
| A | US - A - 4 366 912 (MATUKURA et al.)<br><br>* Totality, especially claims 1,2,5,6 *<br><br>----- | 1-5 | |

The present search report has been drawn up for all claims

| Place of search | Date of completion of the search | Examiner |
|---|---|---|
| VIENNA | 29-09-1986 | CZUBA |